# EUROPÄISCHE PATENTSCHRIFT

(11) **EP 1 294 065 B1**
(45) Veröffentlichungstag und Bekanntmachung des Hinweises auf die Patenterteilung: **11.01.2006**
(21) Anmeldenummer: 02015468.8
(22) Anmeldetag: 12.07.2002
(51) Int. Cl.: H02G 3/04

(54) **Verdrahtungskanal**
Wiring channel
Goulotte de cablage

(30) Priorität: 12.09.2001 DE 20115027 U
(43) Veröffentlichungstag der Anmeldung: 19.03.2003
(73) Patentinhaber: Tehalit GmbH, 67716 Heltersberg (DE)
(72) Erfinder: Eberle, Patrick, 66292 Riegelsberg (DE)
(74) Vertreter: Patentanwälte Möll und Bitterich

(56) Entgegenhaltungen:
- CH-A- 443 432
- DE-A- 2 002 912
- FR-A- 2 132 807

## Beschreibung

Die Erfindung betrifft Verdrahtungskanäle gemäß dem Oberbegriff des Anspruchs 1.

Verdrahtungskanäle sind seit vielen Jahrzehnten in den unterschiedlichsten Varianten bekannt und in Gebrauch. Man vergleiche beispielsweise US 2 896 009, angemeldet 1955, US 2 921 607, FR 1 213 786, FR 11 77 110, FR 1 224 204, DE 1 829 069U, DE-AS 1 440 231, DE-AS 1 440 237, DE 1 848 965U, DE 2 002 912A, DE 27 14 885C, DE 30 14 695A, EP 0315 531B, FR 2 691 227A, EP 0 570 272B und DE 198 28 082A, angemeldet 1998. Alle diese Verdrahtungskanäle besitzen einen Boden, zwei Seitenwände, die durch senkrecht zum Boden verlaufende Schlitze zu Zungen umgeformt sind, Deckelhalteprofile an den freien Längskanten der Seitenwände und gegebenenfalls einen Deckel, der auf die Deckelhalteprofile der Seitenwände lösbar aufgesetzt werden kann.

Verdrahtungskanäle werden überwiegend in Schaltschränken eingesetzt, wo sie die ordentliche Verlegung von Drähten und Leitungen ermöglichen. Dabei haben die Schlitze in den Seitenwänden die Aufgabe, das Ein- und Ausführen von Drähten und Leitungen zu ermöglichen.

Falls Kabel ein- oder ausgeführt werden müssen, die einen größeren Querschnitt haben als die Schlitzbreite, können einzelne Zungen abgebrochen werden. Um dieses Abbrechen zu erleichtern, sind die Zungen der in der DE-AS 14 40 231 und der DE-AS 14 40 237 offenbarten Verdrahtungskanäle mit Sollbruchstellen versehen, die das saubere Abbrechen der Zungen auch ohne Zuhilfenahme eines Werkzeugs ermöglichen sollen.

Falls die Verdrahtungskanäle mit einem Deckel verschlossen werden, muss der Form der Deckelhalteprofile besondere Aufmerksamkeit geschenkt werden. Durch die regelmäßigen Schlitze ist die Stabilität der Seitenwände bereits reduziert. Darüber hinaus muss in Schaltschränken mit erhöhten Temperaturen gerechnet werden, was zu einer weiteren Verringerung der Elastizität der Zungen führt. Um auch unter ungünstigen Umständen ein selbsttätiges Lösen des Deckels zu verhindern, werden die Zungen, die Deckelhalteprofile und der Deckel so dimensioniert, dass die Profile sich breitflächig überlappen und die Zungen bei aufgesetztem Deckel eine große Vorspannung erhalten.

Dadurch wird jedoch das Aufsetzen und insbesondere das Abnehmen des Deckels erschwert und der für die Aufnahme von Drähten und Leitungen zur Verfügung stehende Innenraum der Verdrahtungskanäle verringert.

Der vorliegenden Erfindung liegt daher die Aufgabe zugrunde, bei Verdrahtungskanälen der eingangs genannten Art die Befestigung der Deckel zu verbessern.

Diese Aufgabe wird gelöst durch einen Verdrahtungskanal mit den Merkmalen des Anspruchs 1.

Da der Deckel jetzt von dem zentral angeordneten Halter gehalten wird, muss diese Funktion nicht mehr von den Deckelhalteprofilen an den Seitenwänden übernommen werden. Die Seitenwände bzw. die daraus geformten Zungen benötigen daher nicht mehr die große Vorspannung, die bisher nötig war, um ein unerwünschtes Lösen des Deckels unter ungünstigen Bedingungen mit Sicherheit zu verhindern, und die Überlappungsflächen können schmal ausgeführt werden. Außerdem kann der erfindungsgemäße Halter auch als Trennwand dienen.

Um den Rückhalt der in den Verdrahtungskanal bereits eingelegten Kabel und Drähte zu verbessern, kann am Kopf des Halters wenigstens eine Kabelrückhalteleiste vorgesehen sein.

Wie an sich bekannt, können auch der erfindungsgemäße Kanal, Deckel und/oder Halter aus einem thermoplastischen Kunststoff hergestellt sein.

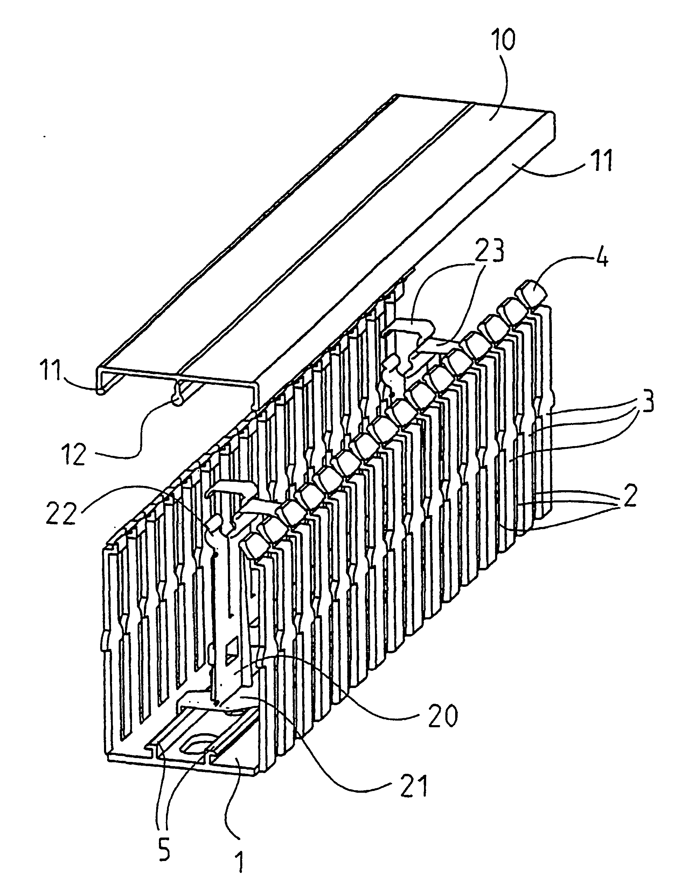

Anhand der Zeichnung soll die Erfindung in Form eines Ausführungsbeispiels näher erläutert werden.

Die Figur zeigt in isometrischer Darstellung einen Verdrahtungskanal mit U-förmigem Querschnitt. Er besitzt einen Boden 1, zwei Seitenwände, die durch regelmäßig eingearbeitete, senkrecht zum Boden 1 verlaufende Schlitze 2 zu Zungen 3 umgeformt sind, und Deckelhalteprofile 4 an den freien Längskanten der Seitenwände bzw. Zungen 3.

Um die aufgrund der Schlitze 2 verringerte Stabilität des Bodens 1 zu erhöhen, sind auf dessen Innenseite zwei parallele Längsleisten 5 angebracht. Diese sind so geformt, dass sie als Halteleisten dienen. Auf die Halteleisten 5 sind die Füße 21 zweier Halter 20 aufgerastet. Die Halter 20 dienen dazu, einen Deckel 10 zu halten, so dass die Deckelhalteprofile 4, 11 an den Zungen 3 bzw. am Deckel 10 von dieser Funktion entlastet sind. Zu diesem Zweck besitzen die Halter 20 an ihrem Kopf ein Deckelhalteprofil 22, welches mit einem an der Unterseite des Deckels 10 angeformten Deckelhalteprofil 12 korrespondiert.

Außerdem unterteilen die Halter 20 den Kanal in zwei Kammem.

Wie die Figur ferner erkennen lässt, sind am Kopf der Halter 20 zusätzlich Kabelrückhalteleisten 23 angeformt, die auch bei einer Wand- oder Überkopfmontage sicherstellen, dass in den Verdrahtungskanal eingelegte Kabel und Drähte nicht herausfallen.

## Patentansprüche

1. Verdrahtungskanal, im wesentlichen umfassend
- einen Boden (1),
- Seitenwände, die durch senkrecht zum Boden (1) verlaufende Schlitze (2) zu Zungen (3) umgeformt sind,
- Deckelhalteprofile (4) an den Seitenwänden
- und gegebenenfalls einen Deckel (10), lösbar aufzusetzen auf die Seitenwände, **gekennzeichnet durch** die Merkmale:
- der Boden (1) ist **durch** wenigstens eine Längsleiste (5) verstärkt,
- die Längsleiste (5) ist als Halteleiste für die lösbare Befestigung von Zusatzteilen (20) wie Trennwände oder dergleichen ausgebildet,
- es ist ein Halter (20) vorgesehen mit
- einem Fuß (21), aufzurasten auf die wenigstens eine Halteleiste (5),
- und einem Kopf mit angeformtem Deckelhalteprofil (22),
- der Deckel (10) besitzt an seiner Unterseite ein Halteprofil (12), welches mit dem Deckelhalteprofil (22) des Halters (20) korrespondiert.

2. Verdrahtungskanal nach Anspruch 1, **gekennzeichnet durch** das Merkmal:
- es sind zwei parallele Halteleisten (5) vorgesehen.

3. Verdrahtungskanal nach Anspruch 1 oder 2, **gekennzeichnet durch** das Merkmal:
- am Kopf des Halters (20) ist wenigstens eine Kabelrückhalteleiste (23) vorgesehen.

4. Verdrahtungskanal nach einem der Ansprüche 1 bis 3, **gekennzeichnet durch** das Merkmal:
- Kanal (1, 3, 4, 5), Deckel (10) und/oder Halter (20) bestehen aus thermoplastischem Kunststoff.

## Claims

1. Wiring duct, essentially comprising
- a bottom (1),
- side walls, which are shaped into tongues (3) by slots (2) extending perpendicularly to the bottom (1),
- cover retaining profiles (4) at the side walls
- and optionally a cover (10), which is to be detachably mounted on the side walls,
**characterised by** the features:
- the bottom (1) is reinforced by at least one longitudinal strip (5),
- the longitudinal strip (5) is formed as a retaining strip for detachably fastening add-on parts (20) such as partitions or similar,
- a holder (20) is provided, comprising
- a foot (21), which is to be locked onto the at least one retaining strip (5),
- and a head with a cover retaining profile (22) formed thereon,
- the cover (10) has at its underside a retaining profile (12), which corresponds with the cover retaining profile (22) of the holder (20).

2. Wiring duct according to Claim 1, **characterised by** the feature:
- two parallel retaining strips (5) are provided.

3. Wiring duct according to Claim 1 or 2, **characterised by** the feature:
- at least one cable retaining strip (23) is provided at the head of the holder (20).

4. Wiring duct according to any one of Claims 1 to 3, **characterised by** the feature:
- the duct (1, 3, 4, 5), cover (10) and/or holder (20) consist of a thermoplastic plastics material.

## Revendications

1. Goulotte de câblage comprenant essentiellement
- un fond (1),
- des parois latérales qui sont transformées en languettes (3) par des fentes (2) s'étendant perpendiculairement au fond (1),
- des profils de maintien (4) du couvercle sur les parois latérales
- et éventuellement un couvercle (10) à poser de façon amovible sur les parois latérales, **caractérisée par** les caractéristiques :
- le fond (1) est renforcé par au moins un listel longitudinal (5),
- le listel longitudinal (5) est réalisé en tant que listel de fixation pour y fixer de façon amovible des éléments supplémentaires (20) tels que des parois de séparation ou analogues,
- il est prévu un support (20) doté
- d'un pied (21) à enclencher sur au moins l'unique listel de fixation (5),
- et d'une partie supérieure sur laquelle est ménagé le profil de maintien (22) du couvercle ,
- le couvercle (10) possède sur sa face inférieure un profil de fixation (12) qui coïncide avec le profil de maintien (22) du couvercle du support (20).

2. Goulotte de câblage selon la revendication 1, **caractérisée par** la caractéristique :
- deux listels de fixation (5) parallèles sont prévus.

3. Goulotte de câblage selon la revendication 1 ou 2, **caractérisée par** la caractéristique :
- au moins une baguette de retenue des câbles (23) est prévue à l'extrémité supérieure du support (20).

4. Goulotte de câblage selon l'une des revendications 1 à 3, **caractérisée par** la caractéristique :
- la goulotte (1, 3, 4, 5), le couvercle (10) et/ou le support (20) sont composés d'une matière synthétique thermoplastique.
